# EUROPEAN PATENT APPLICATION

(11) **EP 3 130 754 A1**
(43) Date of publication of application: **15.02.2017**
(21) Application number: 16183977.4
(22) Date of filing: 12.08.2016
(51) Int. Cl.: F01D 5/14, F01D 5/18, B23P 15/04

(54) **ROTATING COMPONENT FOR A TURBOMACHINE AND METHOD FOR PROVIDING COOLING OF A ROTATING COMPONENT**

(30) Priority: 13.08.2015 US 201514825228
(71) Applicant: General Electric Company, Schenectady, NY 12345 (US)
(72) Inventor: KOTTILINGAM, Srikanth Chandrudu, Greenville, SC South Carolina 29615 (US); TOLLISON, Brian Lee, Greenville, SC South Carolina 29615 (US); CUI, Yan, Greenville, SC South Carolina 29615 (US); SCHICK, David Edward, Greenville, SC South Carolina 29615 (US)
(74) Representative: Pöpper, Evamaria

(57) **Abstract**

A rotating component (10) for a turbomachine including a body (12) having an outer surface (14), at least one groove (16,116) formed in the outer surface (14), and a strip of material (18, 118) at least partially inserted into and overlying the groove (16,116). The strip of material (18, 118) is thermally bonded to the body (12) overlying the groove (16,116) to form a passageway (20,120). The strip of material (18, 118) having a finished outer surface (24) opposite the groove (16,116) is substantially coincident with the corresponding outer surface (14) of the body (12) prior to formation of the groove (16,116). A corresponding method of providing cooling of a rotating component is also provided.

## Description

### FIELD OF THE INVENTION

The present invention relates generally to components for a turbomachine and method for providing cooling of components for a turbomachine, and more particularly, to rotating components for a turbomachine and method for providing cooling of rotating components for a turbomachine.

### BACKGROUND OF THE INVENTION

Rotating components, such as turbine blades, are often used in applications requiring high strength in elevated temperature environments, such as for turbomachines. It is desirable to provide cooling for these components.

In response, non-traditional machining methods such as Electrical Discharge Machining ("EDM") and Shaped Tube Electro-Chemical Machining (STEM) have been used to form radially extending cooling channels through the root and core portions of turbine blades. Unfortunately, since these machining methods have limitation on the size, shape and location of the channels with respect to the complicated airfoil shapes and wall thickness of the turbine blades, it is difficult or impossible to achieve advanced designs for the cooling channels.

Alternately, U.S. Patent Nos. 3,856,433, 4,134,709 and 4,311,433 ('433 patent) disclose forming longitudinal grooves in the surface of the airfoil section of the blades, and applying an overlying conformal skin, including a perforated skin ('433 patent) over the entire airfoil section surface.

However, the overlying conformal skin results in an increase in the peripheral cross section of the airfoil surfaces, so that in order to utilize this construction, the thickness of the overlying skin must be taken into consideration in the design of the turbine blade. That is, an addition of material along the peripheral airfoil section surfaces likely results in a reduction in the efficiency of the turbomachine. As a result, an amount of blade material equivalent to the amount of volume occupied by the overlying skin must be removed from the peripheral airfoil section surfaces in order to maintain the originally designed peripheral airfoil section surfaces. The removal of this amount of material along the peripheral airfoil section surfaces may be problematic, as the operating temperatures that the blades are subjected to continue to rise in an effort to increase efficiency. The resulting "thinner" blade may have inadequate structural strength to meet such increasingly rigorous operational requirements.

### SUMMARY OF THE INVENTION

The present invention is directed to a body having an outer surface, at least one groove formed in the outer surface, and a strip of material at least partially inserted into and overlying the groove. The strip of material is thermally bonded to the body overlying the groove to form a passageway. The strip of material having a finished outer surface opposite the groove is substantially coincident with the corresponding outer surface of the body prior to formation of the groove.

The present invention is also directed to a method for providing cooling of a rotating component for a turbomachine. The method includes providing a rotating component including a body having an outer surface, forming at least one groove in the outer surface, preparing at least one pre-sintered strip of material, placing the pre-sintered strip of material at least partially inserted into and overlying the groove, and thermally bonding the strip to the body overlying the groove. The method further includes removing material from an outer surface of the strip of material opposite the groove such that the outer surface of the strip of material is substantially coincident with the corresponding outer surface of the body prior to formation of the groove.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a front elevation view of an exemplary rotating component for use in a turbomachine.
FIG. 2 is a cross section taken along line 2-2 of FIG. 1 of the rotating component prior to insertion of a strip of material in a groove of the rotating component.
FIG. 3 is an enlarged partial view of the cross section of FIG. 2 of the rotating component and inserted strip of material.
FIG. 4 is an enlarged partial view of the cross section of FIG. 2 of the rotating component and inserted strip of material after a portion of the strip of material has been removed.
FIG. 5 is an embodiment of an enlarged partial view of the cross section of FIG. 2 of the rotating component and inserted strip of material in a groove of the rotating component.
FIG. 6 is an embodiment of an enlarged partial view of the cross section of FIG. 2 of the rotating component and inserted strip of material after a portion of the strip of material has been removed.
FIG. 7 is a front elevation view of exemplary embodiments of grooves formed in a rotating component for use in a turbomachine.
FIG. 8 is an embodiment of an enlarged partial view of the cross section of FIG. 2 of the rotating component and inserted strip of material after a portion of the strip of material has been removed.
FIG. 9 is a flow chart illustrating a method of manufacture of the present invention for providing cooling of a rotating component for a turbomachine.

### DETAILED DESCRIPTION OF THE INVENTION

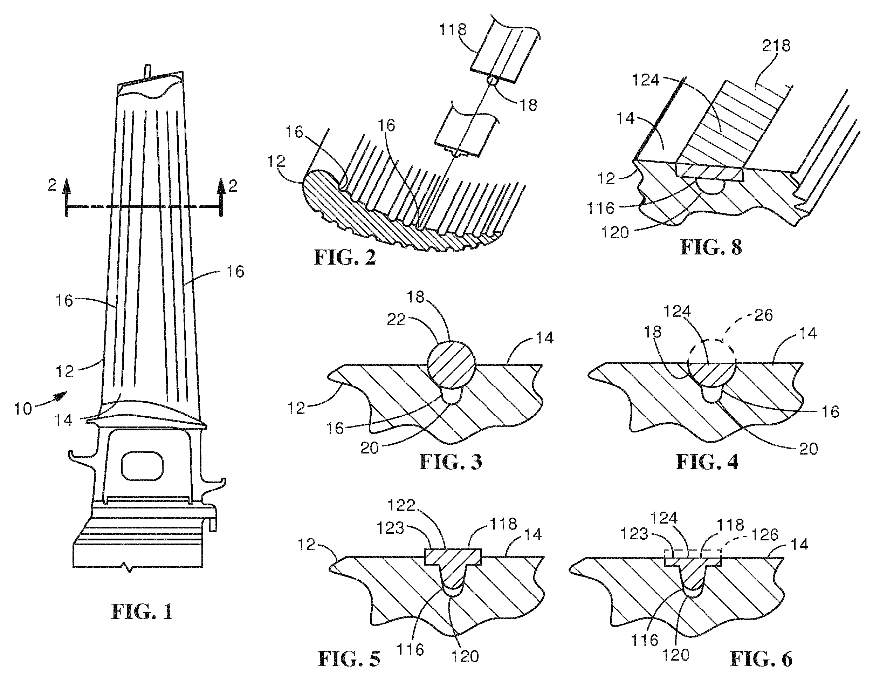

FIG. 1 shows an exemplary rotating component or blade or turbine blade 10. Turbine blade 10 includes a body 12 having an outer surface 14 in which grooves 16 are formed. As shown in FIG. 2, which is a cross section taken from line 2-2 of FIG. 1, a strip of material 18, such as a pre-sintered preform, is at least partially inserted in and overlying a corresponding groove 16. Once strip of material 18 has been partially inserted into and overlying a corresponding groove 16, strip of material 18 is thermally bonded to body 12 such as by brazing, preferably performed in vacuum, which will be discussed in further detail below. The partially inserted strip of material 18 and groove 16 form a passageway 20 (FIG. 3) for receiving a fluid for cooling turbine blade 10 during operation of the turbomachine (not shown). As further shown in FIG. 3, the partially inserted strip of material 18 has an outer surface 22 facing away from groove 16. Once strip of material 18 has been thermally bonded to body 12, then as shown in FIG. 4, strip of material 18 is subjected to a machining process or other suitable process resulting in removal of material from outer surface 22 of strip of material 18. Upon completion of the machining, grinding or other suitable material removal process, a finished outer surface 24 is achieved as a result of removed material 26 from strip of material 18, with finished outer surface 24 being substantially coincident with the corresponding outer surface 14 of body 12 of turbine blade 10 prior to formation of the groove 16.

In one embodiment, as shown in FIGS. 5 and 6, strip of material 118 is at least partially inserted into and overlying a corresponding groove 116. Strip of material 118 includes a pair of opposed flanges 123, and groove 116 has opposed recesses configured to conformally receive flanges 123. Once strip of material 118 has been partially inserted into and overlying a corresponding groove 116, strip of material 118 is thermally bonded to body 12 such as by brazing, which will be discussed in further detail below. The partially inserted strip of material 118 and groove 116 form a passageway 120 for receiving a fluid for cooling turbine blade 10 during operation of the turbomachine (not shown). As further shown in FIG. 5, the partially inserted strip of material 118 has an outer surface 122 facing away from groove 116. Once strip of material 118 has been thermally bonded to body 12, then as shown in FIG. 6, strip of material 118 is subjected to a machining or grinding process or other suitable process resulting in removal of material from outer surface 122 of strip of material 118. Upon completion of the machining, grinding or other suitable material removal process, a finished outer surface 124 is achieved as a result of removed material 126 from strip of material 118, with finished outer surface 124 being substantially coincident with the corresponding outer surface 14 of body 12 of turbine blade 10 prior to formation of the groove 116. In one embodiment, FIG. 8 shows a finished outer surface 224 of strip of material 218 being substantially coincident with the corresponding outer surface 14 of body 12 of turbine blade 10 prior to formation of the groove 116. Stated another way, finished outer surface 124, 224 is blended to make the adjoining surfaces of outer surface 14 smooth.

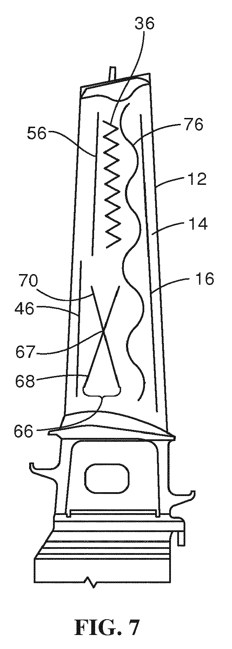

FIG. 7 shows exemplary embodiments of grooves formed in body 12. It is to be understood that other embodiments of grooves may be formed, and are intended to be encompassed in the present invention. For example, groove 16 may extend radially outward in the airfoil surface or outer surface 14 for substantially the entire length of the airfoil, although partial length grooves 46, 56 may be formed in outer surface 14. As further shown in FIG. 7, overlapping grooves 66, such as grooves 68, 70 having at least one position of groove overlap 67 may be formed in outer surface 14. A zig-zag groove 36 and a curvilinear groove 76 are also shown in FIG. 7. It is to be understood that any groove may at least partially extend substantially axially (straight line) and/or curvilinearly, including serpentinely, in any direction relative to the length of the airfoil, and may have a substantially uniform cross section or more than one cross section. In addition, at least a portion of the cross-sectional profile of the grooves may define a U-shape, V-shape, polygonal and/or curvilinear cross section. The grooves may have a substantially uniform depth relative to the airfoil surface, or have more than one depth relative to the air foil surface. The location and cross-sectional profiles of the grooves result in a more uniform temperature of the airfoil.

The grooves may have a depth of between about 0.01 inch and about 0.13 inch, between about 0.02 inch and about 0.10 inch, between about 0.03 inch and about 0.08 inch, between about 0.05 inch and about 0.07 inch, about 0.06 inch, or any suitable range or sub-range thereof. The grooves may have a width of between about 0.01 inch and about 0.25 inch, between about 0.05 inch and about 0.20 mm, between about 0.10 inch and about 0.15 inch, about 0.12 inch, or any suitable range or sub-range thereof. Strip of material 18 (e.g., pre-sintered material) may have a thickness of between about 0.005 inch and about 0.25 inch, between about 0.01 inch and about 0.2 inch, between about 0.05 inch and about 0.15 inch, between about 0.1 inch and about 0.13 inch, about 0.12 inch, or any suitable range or sub- range thereof.

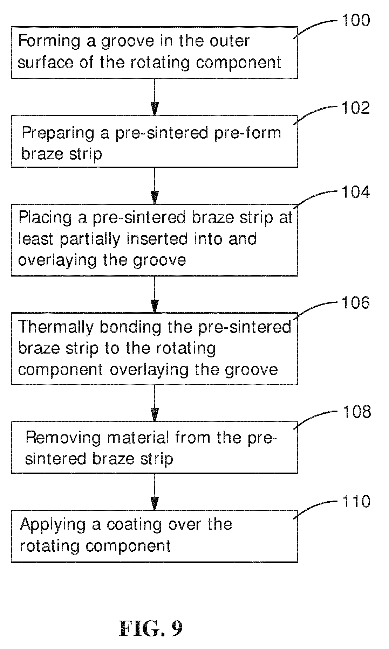

FIG. 9 is a flow chart that illustrates a method of manufacture of the present invention to produce a rotating component for use in a turbomachine, such as a turbine blade, although other methods may be used. For purposes herein, the terms "a", and "an" are used interchangeably with "at least one" or a term immediately followed by the suffix "(s)". The initial step 100 of the process typically includes forming at least one groove in the outer surface of the rotating component. Once at least one groove has been formed in the outer surface of the rotating component, the next step, 102, includes preparing at least one pre-sintered strip or pre-sintered preform brazed strip of material 18, 118 (FIG. 1). Suitable materials for the pre-sintered preform 18, 118 include, but are not limited to, a mixture of base alloy particles having a composition similar to the alloy of the component, such as superalloys.

In one embodiment, the superalloy has a composition, by weight, of between about 5.4% and about 5.7% Al, between about 0.06% and about 0.09% C, between about 8.0% and about 8.5% Cr, between about 9.0% and about 9.5% Co, up to about 0.1% Mn (with or without being present), up to about 0.25% Si (with or without being present), between about 9.3% and about 9.7% W, a balance of Ni, and incidental impurities.

In one embodiment, the superalloy has a composition, by weight, of about 6.6% - 7.0% Cr, about 11.45% - 12.05% Co, about 5.94% - 6.30% Al, about 0.02% Ti, about 4.70% - 5.10% W, about 1.3% - 1.7% Mo, about 2.6% - 3.0% Re, about 6.20% - 6.50% Ta, about 1.3% - 1.7% Hf, about 0.10% - 0.14% C, about 0.0035% Mn, about 0.03% Zr, about 0.01% - 0.02% B, about 0.2% Fe, about 0.06% Si, about 0.1 % K, about 0.004% S, about 0.1% Nb, a balance of Ni, and incidental impurities.

In one embodiment, the superalloy has a composition, by weight, of about 7.6% Cr, about 3.1% Co, about 7.8% Al, about 5.5% Ta, about 0.1% Mo, about 3.9% W, about 1.7% Re, about 0.15% Hf, about 0.02% C, about 0.015% B, and a balance of Ni, and incidental impurities.

In one embodiment, the superalloy has a composition, by weight, of between about 0.13% - 0.19% C, a maximum of about 0.4% Si, between about 0.70% - 1.00% Mn, a maximum of about 0.025% P, between about 0.020% - 0.040% S, between about 0.60% - 1.00% Cr, between 0.80% - 1.10% Ni, between 0.020% - 0.050% Al, and incidental impurities.

In one embodiment, the braze material has a composition, by weight, of between about 13% and about 15% Cr, between about 9% and about 11% Co, between about 3.2% and about 3.8% Al, between about 2.2% and about 2.8% Ta, between about 2.5% and about 3.0% B, up to about 0.10 Y (with or without being present), a balance of Ni, and incidental impurities.

In one embodiment, the braze material has a composition, by weight, of about 71% Ni, about 19% Cr and about 10% Si;

In one embodiment, the braze material has a composition, by weight, of between about 14% and about 16% Co, between about 19% and about 21% Cr, between about 4.6% and about 5.4% Al, a maximum of about 0.02% B, a maximum of about 0.05% C, between about 7.5% and about 8.1% Si, , a maximum of about 0.05% Fe, and a balance of Ni, and incidental impurities;

In one embodiment, the braze material has a composition, by weight, of about 15.3% Cr, about 10.3% Co, about 3.5% Ta, about 3.5% Al, about 2.3% B, a balance of Ni, and incidental impurities.

The mixture is at any suitable ratio for providing desired properties. For example, suitable ratios by weight of the base alloy particles relative to the braze material particles is between about 90/10 and about 30/70, between about 75/25 and about 35/65, between about 65/35 and about 50/50, about 70/30, and any suitable range or sub-range thereof. The mixture is pre-sintered at a suitable pressure and at a temperature less than the solidus temperatures of the braze and superalloy particles in an inert atmosphere until a suitable porosity is achieved. The pre-sintered preform strip material has a thickness of between about 0.005 inch and about 0.250 inch, between about 0.01 inch and about 0.23 inch, between about 0.015 inch and about 0.20 inch, about 0.02 inch and any suitable range or sub-range thereof. It is to be understood that the thickness may be substantially uniform, or may vary along the length of the pre-sintered preform strip material.

Once the pre-sintered preform braze strip(s) of material have been prepared in a shape and contour corresponding to particular groove(s) of interest formed in the rotating component, the next step 104 includes placing the pre-sintered braze strip(s) of material at least partially inserted into and overlying the groove. Optionally, the pre-sintered strip(s) of material may be spot welded in position in preparation of further processing. Once the pre-sintered strip(s) has been placed, the next step 106 includes thermally bonding the pre-sintered strip(s) to the rotating component and overlying the groove. For example, thermal bonding may be achieved by brazing the pre-sintered strip(s) to the rotating component in a vacuum at a braze temperature of between about 2,050°F and about 2,300°F, between about 2,100°F and about 2,250°F, between about 2,150°F and about 2,200°F, about 2,150°F, and any suitable range or sub-range thereof for a braze hold time of between about 5 minutes and about 60 minutes, between about 15 minutes and about 50 minutes, between about 25 minutes and about 40 minutes, between about 30 minutes and about 35 minutes, about 30 minutes, and any suitable range or sub-range thereof.

Once the pre-sintered strip of material has been thermally bonded to the rotating component overlying the groove, the next step 108 includes removing material from the pre-sintered braze strip(s) of material for blending the outer surface of the pre-sintered strip(s) to make the adjoining surfaces of the outer surface or airfoil surface consistent with the manner previously discussed.

Once a sufficient amount of material has been removed from the pre-sintered braze strip(s) of material, optionally, the next step 110 includes applying a coating over the rotating component, such as applying at least one of a metal coating over the outer surface of the rotating component, a metal coating and an overlying thermal barrier coating over the outer surface of the rotating component, and a thermal barrier coating over the outer surface of the rotating component.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following clauses:
1. A rotating component for a turbomachine comprising:
   a body having an outer surface;
   at least one groove formed in the outer surface; and
   a strip of material at least partially inserted into and overlying the groove;
   wherein the strip of material is thermally bonded to the body overlying the groove to form a passageway, the strip of material having a finished outer surface opposite the groove substantially coincident with the corresponding outer surface of the body prior to formation of the groove.
2. The component of clause 1, wherein the body is comprised of a metal.
3. The component of clause 1, wherein the strip of material is a pre-sintered preform braze.
4. The component of clause 3, wherein base alloy particles of the pre-sintered preform braze strip of material has a composition, by weight, of:
   between about 5.4% and about 5.7% Al, between about 0.06% and about 0.09% C, between about 8.0% and about 8.5% Cr, between about 9.0% and about 9.5% Co, up to about 0.1% Mn (with or without being present), up to about 0.25% Si (with or without being present), between about 9.3% and about 9.7% W, and a balance Ni;
   about 6.6% - 7.0% Cr, about 11.45% - 12.05% Co, about 5.94% - 6.30% Al, about 0.02% Ti, about 4.70% - 5.10% W, about 1.3% - 1.7% Mo, about 2.6% - 3.0% Re, about 6.20% - 6.50% Ta, about 1.3% - 1.7% Hf, about 0.10% - 0.14% C, about 0.0035% Mn, about 0.03% Zr, about 0.01% - 0.02% B, about 0.2% Fe, about 0.06% Si, about 0.1% K, about 0.004% S, about 0.1% Nb, and a balance of Ni;
   about 7.6% Cr, about 3.1% Co, about 7.8% Al, about 5.5% Ta, about 0.1% Mo, about 3.9% W, about 1.7% Re, about 0.15% Hf, about 0.02% C, about 0.015% B, and a balance of Ni; or
   between about 0.13% - 0.19% C, maximum of about 0.4% Si, between about 0.70% - 1.00% Mn, maximum of about 0.025% P, between about 0.020% - 0.040% S, between about 0.60% - 1.00% Cr, between 0.80% - 1.10% Ni, between 0.020% - 0.050% Al.
5. The component of clause 3, wherein a braze material has a composition, by weight, of:
   between about 13% and about 15% Cr, between about 9% and about 11% Co, between about 3.2% and about 3.8% Al, between about 2.2% and about 2.8% Ta, between about 2.5% and about 3.0% B, up to about 0.10 Y (with or without being present), and a balance of Ni;
   about 71% Ni, about 19% Cr and about 10% Si;
   between about 14% and about 16% Co, between about 19% and about 21% Cr, between about 4.6% and about 5.4% Al, a maximum of about 0.02% B, a maximum of about 0.05% C, between about 7.5% and about 8.1% Si,, a maximum of about 0.05% Fe, and a balance of Ni; or
   about 15.3% Cr, about 10.3% Co, about 3.5% Ta, about 3.5% Al, about 2.3% B, and a balance of Ni.
6. The component of clause 1, wherein the groove has a substantially uniform depth relative to the outer surface of the body.
7. The component of clause 1, wherein the groove has more than one depth relative to the outer surface of the body.
8. The component of clause 1, wherein the groove has more than one width.
9. The component of clause 1, wherein the groove has a substantially uniform cross section.
10. The component of clause 1, wherein the groove has more than one cross section.
11. The component of clause 1, wherein the groove is substantially straight.
12. The component of clause 1, wherein the groove is at least partially zig-zag.
13. The component of clause 1, wherein the groove is at least partially curvilinear.
14. The component of clause 1, wherein the groove has a depth between about 0.01 inch and about 0.13 inch.
15. The component of clause 1, wherein the groove has a width between about 0.01 inch and about 0.25 inch.
16. The component of clause 1, wherein the pre-sintered preform has a thickness between about 0.005 inch and about 0.25 inch.
17. The component of clause 1, wherein at least a portion of groove defines at least one of a U-shape, V-shape, rectangular, polygonal, curvilinear cross section.
18. A method for providing cooling of a rotating component for a turbomachine comprising:
   providing a rotating component comprising a body having an outer surface;
   forming at least one groove in the outer surface;
   preparing at least one pre-sintered strip of material;
   placing the pre-sintered strip of material at least partially inserted into and overlying the groove;
   thermally bonding the strip to the body overlying the groove; and
   removing material from an outer surface of the strip of material opposite the groove such that the outer surface of the strip of material is substantially coincident with the corresponding outer surface of the body prior to formation of the groove.
19. The method of clause 18, further comprising applying at least one of a metal coating over the outer surface, a metal coating and an overlying thermal barrier coating over the outer surface, and a thermal barrier coating over the outer surface.
20. The method of clause 18, wherein thermally bonding the strip to the body is achieved by brazing at a temperature between about 2,050°F and about 2,300°F for a period of between about 5 minutes and about 60 minutes.

## Claims

1. A rotating component (10) for a turbomachine comprising:
a body (12) having an outer surface (14);
at least one groove (16,116) formed in the outer surface (14); and
a strip of material (18, 118) at least partially inserted into and overlying the groove (16,116);
wherein the strip of material (18, 118) is thermally bonded to the body (12) overlying the groove (16,116) to form a passageway (20), the strip of material (18, 118) having a finished outer surface (24) opposite the groove (16,116) substantially coincident with the corresponding outer surface (14) of the body (12) prior to formation of the groove (16,116).

2. The component (10) of claim 1, wherein the body (12) is comprised of a metal.

3. The component (10) of claim 1, wherein the strip of material (18, 118) is a pre-sintered preform braze.

4. The component (10) of claim 3, wherein base alloy particles of the pre-sintered preform braze strip of material (18, 118) has a composition, by weight, of:
between 5.4% and 5.7% Al, between 0.06% and 0.09% C, between 8.0% and 8.5% Cr, between 9.0% and 9.5% Co, up to 0.1% Mn (with or without being present), up to 0.25% Si (with or without being present), between 9.3% and 9.7% W, and a balance Ni; or
6.6% - 7.0% Cr, 11.45% - 12.05% Co, 5.94% - 6.30% Al, 0.02% Ti, 4.70% - 5.10% W, 1.3% - 1.7% Mo, 2.6% - 3.0% Re, 6.20% - 6.50% Ta, 1.3% - 1.7% Hf, 0.10% - 0.14% C, 0.0035% Mn, 0.03% Zr, 0.01% - 0.02% B, 0.2% Fe, 0.06% Si, 0.1% K, 0.004% S, 0.1% Nb, and a balance of Ni; or
7.6% Cr, 3.1% Co, 7.8% Al, 5.5% Ta, 0.1% Mo, 3.9% W, 1.7% Re, 0.15% Hf, 0.02% C, 0.015% B, and a balance of Ni; or
between 0.13% - 0.19% C, maximum of 0.4% Si, between 0.70% - 1.00% Mn, maximum of 0.025% P, between 0.020% - 0.040% S, between 0.60% - 1.00% Cr, between 0.80% - 1.10% Ni, between 0.020% - 0.050% Al.

5. The component (10) of claim 3, wherein a braze material (18, 118) has a composition, by weight, of:
between 13% and 15% Cr, between 9% and 11% Co, between 3.2% and 3.8% Al, between 2.2% and 2.8% Ta, between 2.5% and 3.0% B, up to 0.10 Y (with or without being present), and a balance of Ni; or
71 % Ni, 19% Cr and 10% Si; or
between 14% and 16% Co, between 19% and 21% Cr, between 4.6% and 5.4% Al, a maximum of 0.02% B, a maximum of 0.05% C, between 7.5% and 8.1% Si, , a maximum of 0.05% Fe, and a balance of Ni; or
15.3% Cr, 10.3% Co, 3.5% Ta, 3.5% Al, 2.3% B, and a balance of Ni.

6. The component (10) of claim 1, wherein the groove (16,116) has a substantially uniform depth relative to the outer surface (14) of the body (12).

7. The component (10) of claim 1, wherein the groove (16) has more than one depth relative to the outer surface (14) of the body (12).

8. The component (10) of claim 1, wherein the groove (16,116) has more than one width.

9. The component (10) of claim 1, wherein the groove (16,116) has a substantially uniform cross section.

10. The component (10) of claim 1, wherein the groove (16,116) has more than one cross section.

11. The component (10) of claim 1, wherein the pre-sintered preform has a thickness between 0.127 mm (0.005 inch) and 6.35 mm (0.25 inch).

12. The component (10) of claim 1, wherein at least a portion of groove (16,116) defines at least one of a U-shape, V-shape, rectangular, polygonal, curvilinear cross section.

13. A method for providing cooling of a rotating component (10) for a turbomachine comprising:
providing a rotating component (10) comprising a body (12) having an outer surface (14);
forming at least one groove (16,116) in the outer surface (14);
preparing at least one pre-sintered strip of material (18, 118);
placing the pre-sintered strip of material (18, 118) at least partially inserted into and overlying the groove (16,116);
thermally bonding the strip to the body (12) overlying the groove (16,116); and
removing material (18, 118) from an outer surface (14) of the strip of material (18, 118) opposite the groove (16,116) such that the outer surface (14 of the strip of material (18, 118) is substantially coincident with the corresponding outer surface (14) of the body (12) prior to formation of the groove (16,116).

14. The method of claim 13, further comprising applying at least one of a metal coating over the outer surface (14), a metal coating and an overlying thermal barrier coating over the outer surface (14), and a thermal barrier coating over the outer surface (14).

15. The method of claim 13, wherein thermally bonding the strip (18, 118) to the body (12) is achieved by brazing at a temperature between 1121°C (2,050°F) and 1260°C (2,300°F) for a period of between about 5 minutes and about 60 minutes.
